# EUROPÄISCHE PATENTSCHRIFT

(11) **EP 1 465 443 B1**
(45) Veröffentlichungstag und Bekanntmachung des Hinweises auf die Patenterteilung: **19.12.2007**
(21) Anmeldenummer: 04100562.0
(22) Anmeldetag: 13.02.2004
(51) Int. Cl.: H04Q 7/22, H04Q 7/38

(54) **Verfahren und Vorrichtung zur Behandlung von ortsbasierten Diensten**
Method and device for servicing location dependent services
Procédé et appareil pour traiter des services positionnels

(30) Priorität: 02.04.2003 DE 10315064
(43) Veröffentlichungstag der Anmeldung: 06.10.2004
(73) Patentinhaber: NOKIA SIEMENS NETWORKS GMBH & CO. KG, 81541 München (DE)
(72) Erfinder: Weiss, Peter, 1150 Wien (AT)

(56) Entgegenhaltungen:
- WO-A-02/15598
- US-A1- 2002 086 682

## Beschreibung

Die Erfindung betrifft ein Verfahren zum Bereitstellen von ortsbasierten Diensten. Die Erfindung betrifft weiterhin eine Vorrichtung zur Durchführung des erfindungsgemäßen Verfahrens.

Heutige Dienste sind eng mit bestimmten Netzen verbunden und Teilnehmer benutzen Kennzeichnungen, welche diese Netze spezifizieren. Die meisten dieser Netze lassen ein Roaming in andere Access Netze zu und die Teilnehmer haben die Wahlfreiheit, mehr als ein Netz zu nutzen, beispielsweise durch ein "Multimode" Terminal oder auch über verschiedene Terminals. Auf der anderen Seite bieten verschiedene Anwendungsserver interessante Dienste an. Diese sollten unabhängig vom zugrundeliegenden Netz und den wechselnden Netz-Anbieter sein. Der Trend geht zu internationalen Dienst-Anbietern, die auch nicht von lokalen Umständen beeinträchtigt sein wollen. Es wäre daher vorteilhaft, einen Server anbieten zu können, der diese Unterschiede verbergen kann.

Derzeit angebotene ortsbasierte Dienste erlauben es, einen Teilnehmer zu lokalisieren. Dienste, die mehr als einen Teilnehmer behandeln wollen, beispielsweise verschiedene "Identitäten" einer Person, oder unbekannte Identitäten in einem bestimmten Bereich unabhängig vom verwendeten Netz, benötigen eine aktuelle Datenbank mit einer Vielzahl von Informationen über die Netze und die von den Netzen abgedeckten Gebiete.

Aktuelle Protokolle von 3GPP (3rd Generation Partnership Project, www.3gpp.org) sind auf ortsbasierte Dienste ausgerichtet, die wenige Teilnehmer behandeln. Dienste, die alle angemeldeten Teilnehmer abdecken sollen, beispielsweise statistische Auswertungen mit feiner lokaler Genauigkeit oder auch auf bestimmte kleinere Gebiete begrenzte Dienste verursachen eine große Menge an Signalisierungsnachrichten und triggern so viele Ortsermittlungvorgänge. Weiterhin sind die Implementierungen bezüglich Schutz der Privatsphäre nicht auf eine höhere Abfragedichte eingerichtet.

Beispiele für hiervon betroffene Dienste sind:
- Notfall-Information für einen Bezirk: beispielsweise Schließung eines Parks, Feuermeldung, Warnung vor Gefahren
- Werbung für eine Gebiet: Eröffnung eines neuen Geschäfts, Beginn einer Veranstaltung in wenigen Minuten...
- Triggern eines Dienstes, wenn der Benutzer ein bestimmtes Areal betritt: z. B. Anbieten von spezieller Information, Wechsel zu einer besseren (oder günstigeren) Verbindung, wie WLAN, bluetooth etc.
- Triggern eines Dienstes, wenn der Benutzer einen bestimmten Zeitraum am selben Ort bleibt: z. B. Anstehen an einer Kasse oder vor einem Eingang, Betrachten einer Anzeige (Poster), Warten an einer Haltestelle...
- der Benutzer kann informiert werden, wenn er sich einem bestimmten Ort nähert, beispielsweise einem Restaurant oder einem Hotel
- der Benutzer wird informiert, wenn er sich einem bestimmten anderen Benutzer oder einer Vorrichtung nähert: Freund, Arbeitskollege, Mitspieler, Parkscheinautomat,...
- der Benutzer wird informiert, wenn eine Person oder Vorrichtung ein Gebiet verlässt: Diebstahlsicherung, Kind verlässt Party etc.
- Ortsabhängige Vergebührung: insbesondere muss der Teilnehmer informiert werden, dass sich die Vergebührung ändert, wenn er ein Gebiet verlässt oder betritt.
- Statistische Auswertungen, wie Ermittlung der Anzahl von Geräten in einem Gebiet, beispielsweise zur Erkennung eines Verkehrsstaus, Reagieren auf den erhöhten Bedarf an öffentlichen Verkehrsmitteln nach dem Ende eine einer Massenveranstaltung wie Konzert, Sportveranstaltung etc.

### Stand der Technik

Ortsabhängige Dienste sind bislang noch in der Einführungsphase und werden daher nicht besonders häufig benutzt. Viele der oben angegebenen Dienste sind noch nicht implementiert oder nur in einer schlechten Auflösung realisierbar, basierend auf Informationen die derzeit im Netz verfügbar sind, wie die CellID (Bezeichung einer Zelle eines zellulären Netzes) oder LAC (Location Area Code - ein aus Zellen gebildeter, größerer Ortsbereich). In der näheren Zukunft werden nur netzspezifische Dienste angeboten werden, eine offene Schnittstelle ist derzeit nicht vorgesehen. OMA/LIF (Open Mobile Alliance, Location Interoperability Forum, www.openmobilealliance.org) und 3GPP beginnen erst damit, die Erweiterungen für ortsabhängiges Triggern zu definieren.

Weiterhin ist der Bedarf für netzübergreifende Dienste noch nicht in größerem Umfang vorhanden, da es derzeit noch wenige Teilnehmer gibt, die verschiedene Zugangsnetze nebeneinander verwenden. Es zeichnet sich jedoch bereits ab, dass beispielsweise eine alternative Nutzung von GPRS (General Packet Radio Services) und WLAN (Wireless Local Area Network) immer populärer wird.

Bislang vorstellbare Lösungen wären:
- Zyklisches Pollen der Endgeräte. Da es sich hier aber um eine große Anzahl von Geräten handeln kann, wird ein hoher Datenfluss erzeugt
- Einbeziehen aller Teilnehmer, wie Broadcast SMS. Keine spezielle Auswahl von Teilnehmern für ein Service möglich (z.B. nur ausländischer Teilnehmer)

Aus der WO 02/15598 A1 ist ein System und ein Verfahren zum Bereitstellen von ortsbasierten Diensten für Nutzer von verschiedenen Mobilfunknetzen bekannt. Dabei ist eine Vermittlungsstelle vorgesehen, welche sowohl zu den Dienstrechnern als auch zu den Netzen Zugang hat, so dass auch bei einem Roaming von Nutzern die Dienste verfügbar bleiben.

Aufgabe der Erfindung ist es, eine Lösung für ein verbessertes Anbieten von ortsabhängigen Diensten und die Lösung der genannten Probleme anzugeben.

### Darstellung der Erfindung

Diese Aufgabe wird gelöst durch ein Verfahren gemäß Anspruch 1 und eine Vorrichtung gemäß Anspruch 11.

Die Erfindung betrifft ein Verfahren zum Bereitstellen Behandlung eines ortsabhängigen Dienstes, für einen abgegrenzten geographischen Bereich (im folgenden auch als Area bezeichnet) für eine Mehrzahl von Teilnehmern in diesem geographischen Bereich, wobei in dem geographischen Bereich mindestens zwei Einrichtungen zur Bestimmung der geographischen Position von Mobilfunknutzern, sind, die jeweils einem Mobilfunknetz zugeordnet sind, welches in dem geographischen Bereich Kommunikationsdienste anbietet.
Ein Client des ortsabhängigen Dienstes sendet eine Anfrage zur Identität von Teilnehmern in einem geographischen Bereich an ein zentrales Netzelement. Das zentrale Netzelement ist beiden Mobilfunknetzen zugeordnet und enthält eine, Datenbank, welche eine Zuordnung zwischen den Identitäten der Teilnehmer und Netzknoten der Mobilfunknetze enthält. Das zentrale Netzelement erfragt nun die aktuelle Information über die in dem abgegrenzten geographischen Bereich aktiven Teilnehmern von den mindestens zwei Einrichtungen zur Bestimmung der geographischen Position von Mobilfunknutzern. Das zentrale Netzelement liefert dann das Ergebnis an den Clienten des ortsabhängigen Dienstes zurück.

In der erfindungsgemäßen Lösung ist das frei wählbare Gebiet nicht auf einen Netzbetreiber beschränkt. Der externe Ortsdienst-Client, external LCS (Location Services) Client, muss die Anfrage nicht mehr an alle Netzbetreiber verteilen, die in dieser Area ihre Dienste anbieten, dies erledigt das zentrale Netzelement für ihn. Solange es sich um 3GPP Netze handelt ist dies ein kleineres Problem, da diese nur in geringer Anzahl vorhanden und allgemein bekannt sind. Aber bei den WLAN Netzen ergibt sich eine andere Situation, da es sich hier um ein schnell wandelndes Geschäft handelt.

Ein zusätzlicher Netzknoten wird nun eingeführt, der alle Netzbetreiber und deren örtlichen Operations-Radius enthält. Das zentrale Netzelement, das sich mit dem Zusammenspiel der Netzbetreiber beschäftigt, gibt Drittanbietern von Diensten die Möglichkeit, günstig und schnell eigene, kleine Anwendungen anzubieten. Endbenutzer, Netzbetreiber und Anwendungsentwickler profitieren von einem solchen Ansatz.

Die vom zentralen Netzelement durchgeführte Verteilung von Funktionalitäten auf viele verbundene Netzknoten, die von verschiedenen Betreibern kontrolliert werden, unterstützt Drittanbieter von Diensten, ihre Dienste auch in Areas anzubieten, die durch technologische, administrative oder juristische Grenzen erschwert werden.

Diese zentralen Netzelemente lösen ebenso dynamische Probleme durch die Reduzierung von Netzlast und Einsatz von Caches (Zwischenspeicher).

Vorteilhafte Ausgestaltungen und Weiterbildungen sind in den Unteransprüchen angegeben.

### Kurzbeschreibung der Zeichnungen

Im folgenden wird die Erfindung anhand von Ausführungsbeispielen erläutert. Dabei zeigen
- Figur 1: eine existierende 3GPP Netzarchitektur mit der erfindungsgemäßen Ergänzung
- Figur 2: eine Architektur mit dem Local Area Server LAS
- Figur 3: verschiedene geographische Bereiche, die durch einen LAS versorgt werden,
- Figur 4: von einem Local Area Server LAS abgedeckter geographischer Bereich, in Baumstruktur dargestellt,
- Figur 5: ein Beispiel für verschiedene, unabhängige Anforderungen und
- Figur 6: ein Datenflussdiagramm.

### Beschreibung der bevorzugten Ausgestaltungsformen

### A. Architektur und Überblick

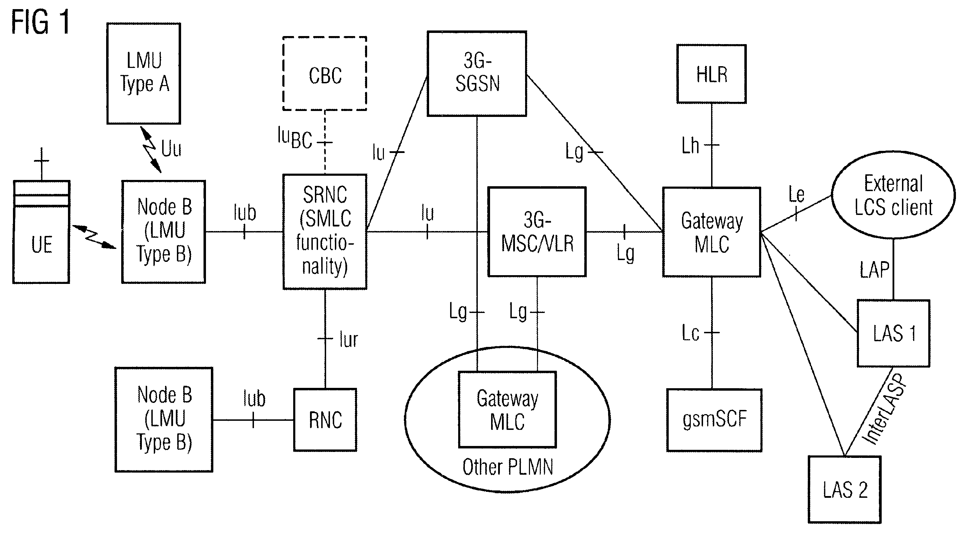

Figur 1 zeigt die aktuelle 3GPP Netz Architektur, wie sie in der Spezifikation 3GPP TS 23.002 (V5.9.0, 2002-12): Network Architecture, in Kapitel 5.2.2 abgebildet ist. Dort ist auch eine weitergehende Beschreibung der Netzelemente und Schnittstellen (Lh, Le, Lc, Lg, Iu, Iur, Iub, Uu etc.) zu finden.

Im Heimatregister, Home Location Register HLR, sind dem Mobilfunkteilnehmer Einträge bezüglich Teilnehmerinformationen zugewiesen.

Das Besuchsregister, Visitor Location Register VLR ist das lokale Register für vermittlungsgebundene Dienste. Es wird von der Mobilvermittlungsstelle, Mobile Switching Center, MSC, benutzt, um Informationen über "roamende" Teilnehmer, also solche von eigenen und fremden Mobilfunkbetreibern, die sich in dem Gebiet aufhalten, zu erhalten und deren Rufe zu behandeln.

Im Gegensatz dazu wird der GPRS Netzknoten, Serving GPRS Support Node, SGSN, zur Speicherung von Teilnehmerinformation für paketorientierte Dienste in einem Mobilfunknetz benötigt.

Die Mobilvermittlungsstelle, Mobile-services Switching Centre, MSC, stellt auch die Schnittstelle zwischen dem Mobilfunknetz und dem Festnetz dar. Die Vermittlungsstelle führt alle notwendigen Funktionen durch um leitungsvermittelte Dienste von und zur Mobilstation abzuwickeln.

Das Gateway Mobile Location Center, GMLC, ist der erste Netzknoten, auf den ein ortsabhängiger Dienst in einem Mobilfunknetz Zugriff hat. Es führt die Autorisation durch und fragt beim Heimatregister HLR die Routing Informationen ab.

Im folgenden steht der GMLC auch für andere Netzknoten, wie WLAN Zugriffspunkte (auch Hotspots genannt), Festnetz etc., die den Zugang für ortsabhängige Dienste bilden.

Ein Node B ist eine logische Netzkomponente, die eine oder mehrere Zellen bedient. Ein Radio Network Controller RNC ist eine Netzkomponente im Mobilfunknetz, die ein oder mehrere Node B kontrolliert.

Die Positionierungseinheit, Location Measurement Unit LMU, führt Funkmessungen durch um Positionierungsmethoden zu unterstützen. Es sind zwei Typen von LMU definiert:
- Type A: Zugriff über die normale GSM Luftschnittstelle (Uₘ), es ist keine Drahtverbindung zu einem anderen Netzelement vorhanden.
- Type B: Zugriff über das Basisstation - Controller Interface (I_{UB}). Das LMU kann ein Stand-Alone Netzelement mit einer Pseudo-Cell ID sein oder in einen Node B integriert sein.

Der Serving Radio Network Controller SRNC koordiniert die Ortsanfragen abhängig von der Priorität und wählt die geeignete Ortsbestimmungs-Methode aus. Er kann eine Schnittstelle zum Controlling Radio Network Controller CRNC aufweisen, die hauptsächlich Hilfsmittel zur Positionsbestimmung des Endgerätes aufweist und entsprechende Messung von den Netzknoten Node B und LMU abfragt.

Eine Beschreibung von Ortsbestimmungsmethoden findet sich z. B. in dem Artikel "Convex Position Estimation in Wireless Sensor Networks" von Lance Doherty, Kristofer S. J. Pister, Laufent El Ghaoui, Infocom 2001, Anchorage, AK, April 2001, (http://www-bsac.eecs.berkeley.edu/~Idoherty/infocom.pdf)

Die GSM Service Control Function, gsmSCF, ist eine funktionelle Einheit, die die CAMEL Dienstelogik zur Implementierung von betreiberspezifischen Diensten enthält.

Das Cell Broadcast Center, CBC, ist verantwortlich für das Management von CBS (cell broadcast service) Nachrichten und der Übermittlung von CBS Nachrichten an das RNS (Radio Network System).

Für den vorliegenden Fall ist nur der rechte Teil der Figur 1 relevant. Ein externer LCS Ortsdienst-Client fragt die Ortsinformation vom Netz über eine Lₑ Schnittstelle ab (3GPP benutzt das Mobile Location Protokoll MLP (LIF/OMA, TS 101 Specification: MLP Mobile Location Protocol). Die Position kann für eine oder mehrere ID's mit definierter Genauigkeit abgefragt werden. Dieses Protokoll kann jedoch nur mit einem Netz umgehen, das durch den externen LCS Ortsdienst-Client mit Hilfe der Teilnehmer Id ausgewählt wurde. In Zukunft soll dieses Protokoll auch für internationale Fälle anwendbar sein.

Ein neues Netzelement, Location Area Server LAS, und ein neues Protokoll, Location Area Protocol LAP, zur Handhabung von Areas, werden eingeführt. Der Location Area Server befindet sich zwischen oder neben dem External LCS Ortsdienst-Client und den verschiedenen Netzen.

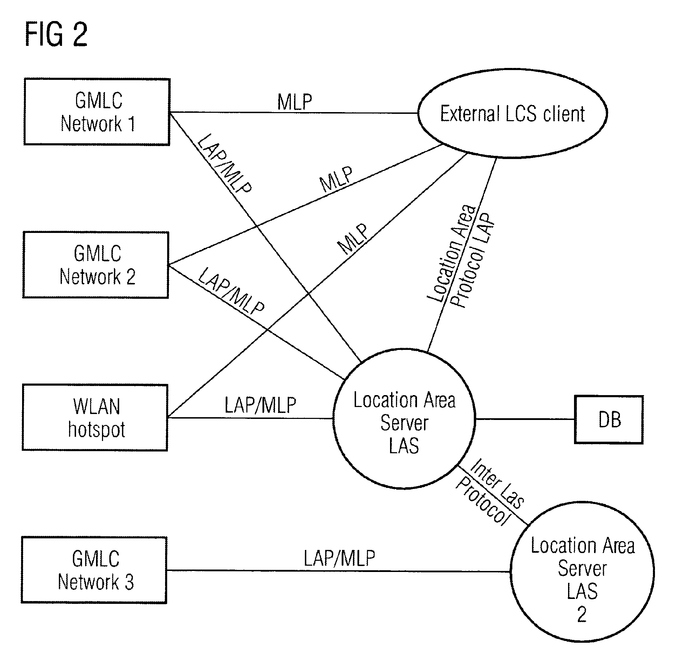

Figur 2 zeigt das neue Netzelement, Location Area Server LAS, und seine Position im Netz. Die verschienen Mobilfunk- oder WLAN-Operatoren können kooperieren und das Netzelement LAS verwenden um ihre eigenen Netzelemente zu entlasten und verschiedene Technologien zu integrieren. Auf der anderen Seite kann das LAS konkurrierende Netze verbinden und es externen Anwendungen erlauben, Zugriff auf diese Netze zu erlangen. Der LAS hat eine Datenbank, die die tatsächliche Netzabdeckung speichert. Jeder LAS ist für ein gewisses Gebiet zuständig. Das Gebiet, das durch einen LAS bedient wird, kann ein Land, ein Kontinent oder auch eine kleinere Einheit darstellen. Es existiert weiterhin ein InterLAS Protokoll zwischen zwei LAS und auch ein Mechanismus zur Auswahl des richtigen LAS. Die Anfragen, die von einem externen LCS Ortsdienst-Client empfangen werden, sind nicht auf das Gebiet begrenzt, das von einem einzelnen LAS abgedeckt wird. Die Kommunikation mit dem External LCS Ortsdienst-Client erfolgt über das Location Area Protocol, LAP. Dieses kann ebenfalls für die Kommunikation mit den Netzknoten GLMC oder WLAN hotspot verwendet werden, existierende Standardprotokolle sind ebenfalls möglich, es müssen allerdings Einbußen in der Funktionalität hingenommen werden.

### 0. Schritt:

Voraussetzung ist die Konfiguration des LAS. Jeder LAS enthält eine Tabelle, die Adressen von Netzknoten und vom LAS bediente Orts-Bereiche enthält. Diese Einträge können statisch, beispielsweise von einem Operator eingetragen sein, oder dynamisch von einem Protokoll ähnlich zu dem in Schritt 1 beschriebenen, erzeugt werden.

### 1. Schritt:

Die Ortsbereichs-Daten im LAS müssen dynamisch auf den neuesten Stand gebracht werden. Sobald ein neuer Netzknoten seinen Dienst anbietet oder die Topologie sich ändert, informiert dieser Netzknoten den nächsten LAS über den neuen bedienten Bereich (Area). Dafür sendet er eine Nachricht LAP:UPDATE_LOCATION_AREA
an den LAS mit hinzugefügten oder entfernten Gebieten, spezifiziert z. B. durch eine Liste von Koordinaten, wie beispielsweise im MLP Protokoll beschrieben. Dort wird der Netzknoten Identifikator, die Adresse des Netzknoten und die bediente Area gespeichert. Wenn der ganze Bereich oder ein Teil davon auch noch von einem oder mehreren zusätzlichen LAS bedient wird, so wird die Nachricht auch an diese LAS weitergeleitet. Die Adressen dieser zusätzlichen LAS werden, zusammen mit dem Netzknoten Identifikator, für weitere Aktionen gespeichert.

Sobald der LAS bei der Sendung von Nachrichten an Netzeinheiten eine Zeitüberschreitung erhält, markiert er das Netz als "nicht erreichbar" um seine Datenbank aktuell zu halten. Der LAS leitet diese Information an alle von dem Ausfall dieser Netzeinheit betroffenen zusätzlichen LAS weiter.

Um unnötige Nachrichten zu vermeiden, sollte jeder Netzknoten den LAS darüber informieren, ob er verfügbar ist. Zu diesem Zweck wird eine Nachricht
LAP:OPERATIONAL_AGAIN
nach einem Ausfall an den LAS gesendet.

Dieser Mechanismus löst auch das Problem von redundanten Netzelementen. Falls das Netz Nr. 1 zwei GMLC zur Bedienung der selben Area verwendet, können beide die Area dem LAS bekannt machen. Der LAS wird den Betrieb soweit fortführen, indem er alle Anfragen dupliziert, solange bis einer der GMLC nicht mehr antwortet. Sobald der GMLC wieder betriebsbereit ist, meldet er sich bei dem LAS und erhält wieder Kopien der Nachrichten.

### 2. Schritt:

Wenn der LAS die Nachricht
LAP:AREA_REQUEST
von einem externen LCS Ortsdienst-Client erhält, die eine Definition einer Area enthält, überprüft der LAS die Area und seine Verantwortlichkeit. Für die Teile von der Area, die von anderen LAS verwaltet werden, leitet er die Anfrage an diese LAS weiter. Für den selbst verwalteter Teil der Area beginnt er, alle Netzknoten die beteiligt sind und deren zuständige Areas zu bestimmen.

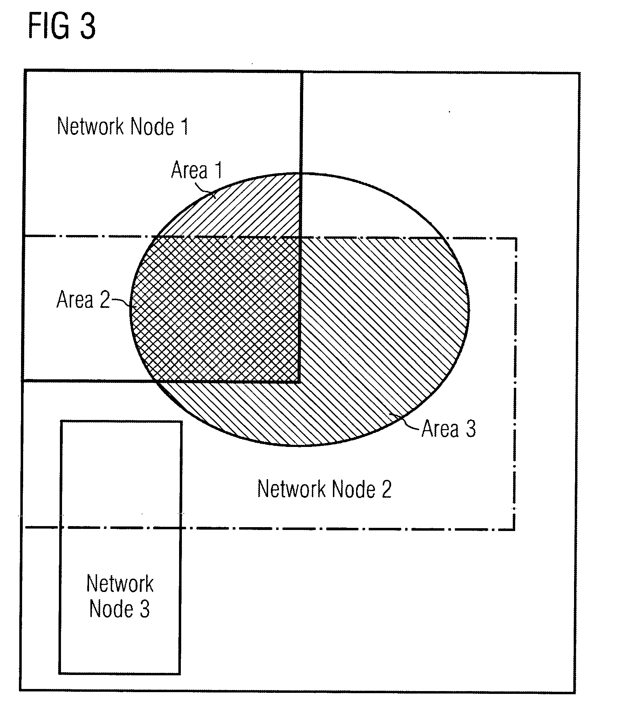

Figur 3 zeigt ein Beispiel für die Area, die durch einen LAS betreut wird. Drei Netzknoten, Network Node [1, 2, 3], haben ihre betreuten Areas (vereinfacht dargestellt als Rechtecke) bekannt gegeben. Die gewünschte Area (eine Ellipse) wird nun gescannt und in drei Areas, Area[1, 2, 3], zerlegt. Neue Sub areas werden gebildet: Subarea 1 bestehend aus Area1 und Area2 wird verwendet für Netzknoten Network Node 1 und Sub-area 2, bestehend aus Area2 und Area3 wird verwendet für Network Node 2. Network Node 3 ist von dieser Anfrage nicht betroffen.

### 3. Schritt:

Die empfangene Anfrage wird nun an alle ausgewählten Netzknoten weitergeleitet, enthalten sind nur die gewünschten subareas. Die erhaltenen Antworten werden zum auslösenden external LCS Ortsdienst-Client geleitet, entweder von allen Netzknoten gesammelt oder einzeln, sobald sie eintreffen, abhängig von der Festlegung in der ursprünglichen Anfrage. Sofern ein Netzknoten nicht antwortet, wird er auf die Liste der nicht erreichbaren Netzknoten gesetzt (siehe 1. Schritt).

### B. Identifikation

Alle bekannten Protokolle, die Ortsinformationen abfragen, wie das MLP (LIF/OMA), benötigen die Identität des Teilnehmers, für den die Ortsinformation abgefragt wird. Diese Identitätsinformationen liegen in verschiedenen Formaten vor, abhängig von den verwendeten Technologien. Beispielsweise sieht eine Internet-Adresse (IP V.4 oder IP V.6) anders aus als eine E.164 Nummer. Externe LCS Ortsdienst-Clients sollen nicht mit diesen unterschiedlichen Formaten konfrontiert werden, vorteilhafterweise übernimmt der LAS die Auflösung.

Für angefragte Areas kennt der external LCS Ortsdienst-Client normalerweise diese Identitäten der Teilnehmer nicht. Natürlich wäre es das Beste, wenn das Netz dieses Problem lösen und ein Protokoll anbieten würde, welches auch bei unbekannter Identität eine Ortabfrage erlaubt. Dieses würde allerdings auch eine Reihe von Bedenken hinsichtlich Schutz der Privatsphäre aufbringen, wenn allen externen LCS Ortsdienst-Clients erlaubt würde, die Teilnehmer eines Netzes aufzuspü ren. Außerdem würde es zu großen Nachrichten mit langen Listen von Teilnehmern führen. Auch wenn keine Rückgabe von Identitäten in der Anfrage verlangt würde, so müsste die Antwort eine Liste von allen Teilnehmern mit irgendeiner Identifizierung und Aufenthaltsort enthalten und außerdem eine Liste von den Teilnehmern, für die die Anfrage nicht erfolgreich war, entweder weil der gesuchte Teilnehmer abwesend ist oder dessen Datenschutzregeln eine Anfrage von diesem external LCS Ortsdienst-Client nicht gestatten.

Ein Netzknoten betrieben in einer vertrauenswürdigen Umgebung, entweder durch gesetzliche Berechtigung oder durch den Netzbetreiber selbst, könnte dieses Problem lösen.

Der LAS enthält eine Datenbank, die die Zuordnung zwischen Identitäten und den verantwortlichen Netzknoten beinhaltet.

### Schritt 1:

Die Netzknoten aktualisieren in Abständen die Datenbank im LAS mit allen Identitäten, die derzeit von ihnen bedient werden, mithilfe von
LAP: UPDATE_IDENTITIES.

### Schritt 2:

Wenn der LAS eine Anfragenachricht vom external LCS Ortsdienst-Client erhält
LAP: AREA_REQUESTS
verteilt er diese Anfrage an jede Identität, die in seiner Datenbank für diesen Netzknoten gespeichert ist.

### Schritt 3:

Alle erfolgreichen Antworten
LAP: AREA_REQUEST_RESP
von in dieser Area lokalisierten Teilnehmern werden zum external LCS Ortsdienst-Client weitergeleitet, entweder gesammelt oder einzeln, abhängig vom Modus der angefordert wurde. Damit wird der external Ortsdienst-Client entlastet, er empfängt keine nicht-relevanten Informationen, zum Beispiel über Teilnehmer, die sich nicht in der angeforderten Area befinden, aber die in dem Netz existieren.

Wenn das benutzte Protokoll zwischen LAS und GMLC (z.B.MLP) es nicht erlaubt, eine Area in ausreichender Genauigkeit zu spezifizieren, so muss die Position jedes Teilnehmers einzeln abgefragt werden und nur solche, die sich in der gewünschten Area befinden, werden zurückgemeldet.

Dieses Vorgehen ist von Vorteil da die Anzahl von Anfragen an die Area reduziert wird, wenn nur aktive Identitäten benutzt werden. Der LCS client muss nichts über die interne Struktur der Identitäten wissen, und die Größe und Anzahl der Nachrichten wird reduziert. Auch der Datenschutz von Teilnehmern, die nicht abgefragt werden, ist so gewährleistet, da keine Daten vom LAS zum LCS client gesendet werden.

Das Netz muss hier aber alle Teilnehmer an das LAS melden. Dabei werden interne Daten weitergeleitet, sowie die Benutzungsfrequenz. Um dieses Datenschutzproblem zu lösen, können LAS kaskadiert werden. Einer befindet sich im Netz des Betreibers und bekommt die Nachricht
LAP:UPDATE_IDENTITIES
und ein weiterer LAS verbindet verschiedene Netze, aber erhält keine Informationen über Identitäten.

Vorteilhafte Ausgestaltungen sind möglich:
Variante A
Für Netzknoten, die eine große Area bedienen, kann es vorteilhaft sein, in die Nachricht
LAP: UPDATE_IDENTITIES
Ortsinformationen einzufügen, beispielsweise die 3GPP location Area. Die Anzahl von LAP: UPDATE_IDENTITIES -Nachrichten wird zunehmen, aber der LAS kann dann nur Identitäten in den angeforderten Areas verwenden und so die Anzahl der Nachrichten an das jeweilige Netz reduzieren.

### Modifizierter Schritt 1:

Der LAS hat interne Regeln für die Konstruktion von Identitäten, abhängig von jedem benutzten Netz, entweder vordefiniert oder mit der Nachricht
LAP: UPDATE_LOCATION_AREA
vom GMLC erhalten. Es erstellt dann jeden möglichen Identifizierer oder benutzt Wildcard-Mechanismen, die von diesem Netz erlaubt werden, um eine Nachricht zu übermitteln (zum Beispiel "MLP: Triggered Location Reporting Request"), die eine Rückmeldung auslöst, falls das Objekt sich ins Netz einbucht. Wenn es einen solchen Report bekommt und dieser Report anzeigt, dass der Teilnehmer verfügbar ist, dann kann es einen periodischen Trigger setzen, um die ortsabhängigen Informationen in einer etwas besseren Genauigkeit zu erhalten, beispielsweise in Location Areas. Mit diesem Standard Protokollmechanismus kann der LAS seine Datenbank bestehend aus Identitäten, Netzknoten und bekannten Ortsinformationen füllen, ohne dass eine Änderung im Netz notwendig wäre.

### Variante B:

Es gibt eine Vielzahl von Applikationen, bei denen der external LCS Ortsdienst-Client die Identität des lokalisierten Objekts nicht kennen muss. Es kann ausreichend sein, eine Information an alle lokalisierten Objekte zu schicken. In diesem Fall reicht eine kleinere Modifikation des Protokolls aus, um auch dieses Problem zu lösen:
Modifizierter Schritt 3:
Bei Erhalt der Antworten
LAP: AREA_REQUEST_RESP
in den angeforderten Areas sammelt der LAS alle Identitäten zusammen mit Fähigkeiten und Eigenschaften von benutzten Endgeräten und gegebenenfalls Identifikatoren dafür (zum Beispiel SMS, WAP, SIP, E-Mailadressen, Voice-Mail, Sprache...). Diese Möglichkeiten und Voreinstellungen können auch durch den LAS direkt von einem Server, der diese Daten hält, ab gerufen werden. Ein temporärer Identifikator für diese Liste von Identitäten wird dann an den external LCS Ortsdienst-Client zurückgeschickt, zusammen mit statistischen Informationen, beispielsweise wie viele Teilnehmer gefunden wurden, wie viele davon SMS benutzen können usw.

### Schritt 4:

Der externe LCS Ortsdienst-Client kann dann bestimmte Teile der Informationen, beispielsweise eine Web-Adresse, eine Telefonnummer, eine Kurznachricht oder Ähnliches an diese temporäre Liste adressieren, indem er die Nachricht
LAP: SUBMIT_INFO
benutzt. Der LAS kann diese Information entsprechend der von ihm gespeicherten Benutzerprofile an alle Teilnehmer dieser temporäre Liste weitersenden.

Viele der beschriebenen Algorithmen können auch vom external LCS Ortsdienst-Client selbst durchgeführt werden. Da es aber eine Menge unabhängiger external LCS Ortsdienst-Clients im Netz gibt, würde es die Netzbelastung durch eine Vielzahl von Nachrichten sehr erhöhen. Es ist daher vorteilhaft, einen zentralen Netzknoten einzuführen, der von einem zuverlässigen, vertrauenswürdigen Betreiber geführt wird. So können auch die Netze verschiedener Netzbetreiber und verschiedener Technologien einfach kombiniert werden.

### C. Dynamische Optimierung mit AREA_IDENTITY

Die von Applikationen benutzten Areas sind normalerweise symbolisch definiert, beispielsweise ein Land, eine Stadt, ein Gebäude oder eine Einkaufspassage. Diese Areas können natürlich durch ein Polygon repräsentiert werden, das aus einer Menge von Punkten und Kanten besteht, siehe zum Beispiel die Spezifikation LIF TS 101. Es ist kein Problem zu berechnen, ob sich die Position eines gesuchten Objekts innerhalb eines gesuchten Polygons befindet. Allerdings ist dafür ein er höhter Rechenaufwand nötig, vor allem wenn festgestellt werden soll, ob das Objekt eine Grenze überschreitet. Hierfür ist eine häufige Durchführung dieser Berechnungen für eine hohe Anzahl von möglichen Objekten und für alle überprüften Areas notwendig, was die Leistungsgrenzen heutiger Netzelemente übersteigt. Daher ist es wünschenswert, eine solche Area nicht in Polygonen auszurechnen, sondern in anderen netzspezifischen Bereichen zu definieren. Dieses kann bei WLAN ein Subnetz sein oder für 3GPP Ortsareas (LAC) und Zellen (CI).

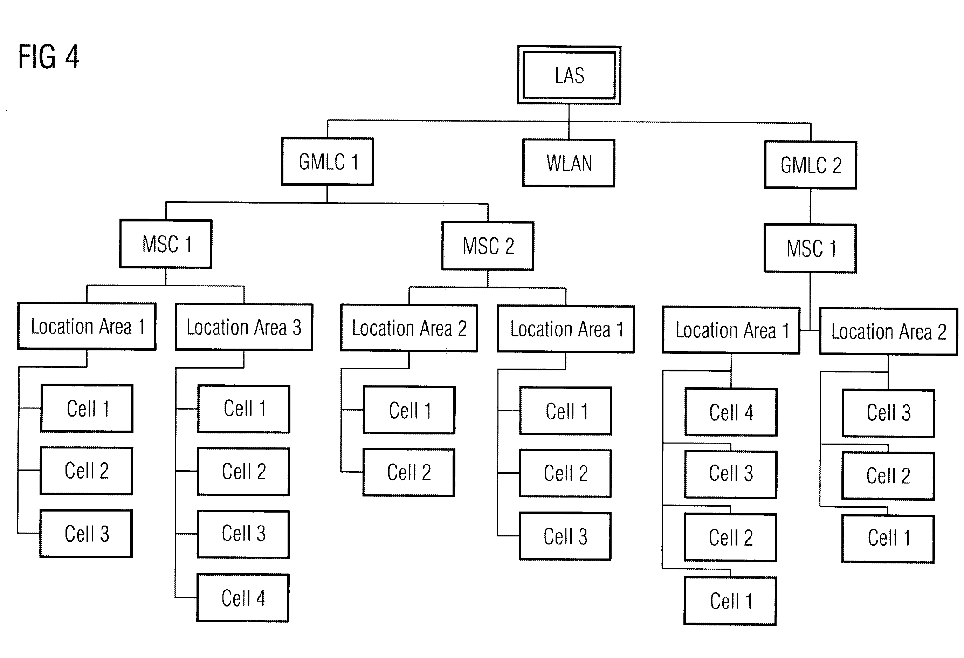

Figur 4 zeigt die geografische Struktur, die von einem LAS betreut wird. Dessen Zuständigkeitsbereich besteht aus einen WLAN und zwei GMLCs. Die GMLC-Areas wiederum werden abgedeckt von einem oder mehreren MSC-SGSN. Diese wiederum sind aufgeteilt in Locationareas und die Locationsareas bestehen aus Funkzellen. Zellulare Netze sind üblicherweise in einer solchen hierarchischen Struktur aufgebaut. Beispielsweise ist 3GPP so definiert, dass ein HLR die MSC-Area eines Teilnehmers kennt, in der dieser sich gerade aufhält. Die MSC weiß immer die letzte Locationarea eines Teilnehmers. Nur in manchen Fällen, beispielsweise wenn der Teilnehmer gerade telefoniert, ist die tatsächliche Zelle bekannt. Die präzise Aufenthaltsposition kann ansonsten nur durch eine explizite Anfrage an das Radionetz oder an die Teilnehmerstation herausgefunden werden.

Ein Algorithmus zur Vermeidung wiederholten Pollings der Position könnte so aussehen: In der ersten Näherung wird eine Menge von die gewünschte Area umschließenden Location Areas LA getriggert. Ist das Zielobjekt in einer dieser Location Areas, so kann eine Positionierungsmethode mit feinerer Genauigkeit angewendet werden, beispielsweise basierend auf den Funkzellen. Eine feinere Bestimmung kann unnötig sein, wenn die geforderte Genauigkeit nicht sehr hoch ist oder die Funkzellen klein sind.

Zur Verwendung des erfindungsgemäßen Mechanismus muss der gewünschte Bereich, der durch Polygone oder einer Zusammensetzung von Ellipsen und Rechtecken gegeben ist, in Location Areas umgewandelt werden. Der dazu notwendige Verarbeitungsvorgang kann je nach Größe des Bereiches recht aufwändig sein und sollte vermieden werden. Auch Veränderungen der Netztopologie sollten für den external LCS Ortsdienst-Client unbemerkt bleiben und transparent sein.

Im folgenden wird also ein Vorgang angegeben, wie ein gewünschter Bereich einmalig vom LAS umgewandelt wird und ein Identifikator für diesen Bereich für weitere Benützung an den externen LCS Ortsdienst zurückgeliefert wird. Dafür ist allerdings die Offenlegung der Lage der netzinternen Location Areas erforderlich. Dies kann Probleme darstellen, da Netzbetreiber möglicherweise die interne Struktur ihres Netzes nicht offen legen wollen.

Das weitere Vorgehen des LAS hängt von der Benutzerstruktur ab, ob der LAS einem Netzbetreiber gehört oder netzbetreiberübergreifend agiert. Sofern der LAS mehreren Netzbetreibern gehört, kann vorteilhafterweise ein kaskadierter Aufbau gewählt werden, wie oben beschrieben. Dann schickt der externe Client seine Anfrage an einem mehreren Netzbetreibern zugehörigen LAS, der sich gemäß Algorithmus A verhält. Danach sendet dieser LAS die Anfrage an die netzbetreiberinternen LAS gemäß Algorithmus B.

Algorithmus A: Der LAS kennt die interne Struktur des Netzes nicht.

### Schritt 1:

Der externe Client sendet eine Nachricht
LAP: REQUEST_AREA_IDENTIFIER
zu dem LAS. Diese Nachricht enthält die vollständige Definition einer Area.

### Schritt 2:

Der LAS führt eine Verarbeitung dieser Area durch, wie bereits in Teil A, Schritt 2 beschrieben. Dabei wird die Nachricht
LAP: REQUEST_AREA_IDENTIFIER
wenn notwendig zu anderen LAS weitergeleitet. Das Ergebnis wird in der Datenbank gespeichert. Es besteht aus einer Liste von betroffenen Einheiten und die Subareas für diese Einheiten, zusammen mit den erhaltenen Identifikatoren von anderen LAS. Bei Änderungen im Netz, wie in Teil A, Schritt 1 beschrieben, wird eine Aktualisierung der Daten durchgeführt. Da diese Aktualisierung nur sporadisch notwendig ist, ist jedenfalls ein Performancegewinn zu erwarten.

### Schritt 3:

Der LAS speichert die Definition der Area zusammen mit dem erhaltenen Resultat, erzeugt einen eindeutigen Namen AREA_IDENTITY und sendet diesen mit der Nachricht
LAP: REQUEST_AREA_IDENTIFIER_RESPONSE zurück.
Dieser Identifikator ist im weiteren Verlauf für externe Clients und auch von anderen Applikationen die davon Kenntnis erhalten haben , benutzbar. Weitere Mechanismen zur Pflege dieser Identifikatoren, beispielsweise das Verwerfen des Eintrags, wenn er nicht innerhalb einer Anzahl von Tagen benutzt wird oder die Checksummenbildung, sind notwendig und dem Fachmann bekannt. Zusätzliche Informationen können ebenfalls enthalten sein, beispielsweise ein lesbarer Bezeichner, der die Beschaffenheit dieser Area beschreibt, wie "Einkaufszentrum XY" oder "Stadt AZ". Ist die angeforderte Area bereits in der Datenbank des LAS enthalten, so wird der gespeicherte Identifikator AREA_IDENTITY zurückgeliefert. Vorteilhafterweise werden durch den LAS Operator bereits bestimmte Identifikatoren vordefiniert, beispielsweise Städte oder Länder.

### Schritt 4:

Die ermittelte oder definierte AREA_IDENTITY kann dann für Nachrichten wie LAP: AREA_REQUEST benutzt werden, wie weiter oben beschrieben. Die Benutzung dieser Identifikatoren kann gefördert werden, beispielsweise durch die Verrechnung geringerer Gebühren oder durch die erhöhte Priorität bei der Beantwortung der Nachrichten.

Algorithmus B: LAS kennt die interne Struktur des Netzes.

### Schritt 0:

Die Nachricht
LAP: UPDATE_LOCATION_AREA
wie weiter oben beschrieben, enthält außerdem die interne Struktur einer behandelten Area, eine Liste von Location Areas und optional auch eine Liste von Funkzellen.
Schritt 1:
   siehe oben Algorithmus A, Schritt 1
Schritt 2:
   siehe oben Schritt 2
   Zusätzlich wird in der Datenbank eine Liste von Location Areas und optional auch von Funkzellen für jede AREA_IDENTITY gespeichert.
Schritte 3 und 4:
   siehe oben Schritt 3 und Schritt 4

Diese Funktionalitäten können natürlich auch in der MSC-SGSN physikalisch integriert sein.

### D. Dynamische Optimierung bei vielen Clients

Das Netz bekommt unterschiedliche unabhängige Anfragen für verschiedene Areas von verschiedenen unabhängigen, Anwendungen (Applications), die sich auf vielen external clients befinden. Wenn das Netz diese Anfragen unabhängig voneinander behandelt, generiert es viel überflüssigen Verkehr. Der beschriebene Algorithmus soll dazu führen, dass die aufwändigen Positionierungsmethoden nur unter bestimmten Bedingungen ausgeführt werden. Dabei wird zuerst festgestellt, ob das Objekt sich in Location Areas befindet, danach in Zellen und nur, wenn das Objekt sich in einer speziellen Zelle befindet, wird die eigentliche Positionierung ausgeführt.

### 1. Schritt:

Wird festgestellt, dass mehrere Anfragen für die gleiche Area angefordert werden (dies kann einfach dadurch ermittelt werden, dass bei einem Vergleich die gleiche AREA_IDENTITITY in den Anforderungen festgestellt wird), so kann die Anfrage durch den LAS selber behandelt werden. Dies geschieht entweder durch Verwendung eines bereits rückgemeldeten (im Cache) zwischengespeicherten Resultats, oder indem auf ein bereits angefordertes aber nicht erhaltenes Resultat gewartet wird. Die Wahrscheinlichkeit für zwei identische Anfragen von unabhängigen Anwendungen ist sehr hoch, wenn viele Konkurrenten dieselben Dienste anbieten oder die Area relativ groß ist, beispielsweise eine Stadt.

### 2. Schritt:

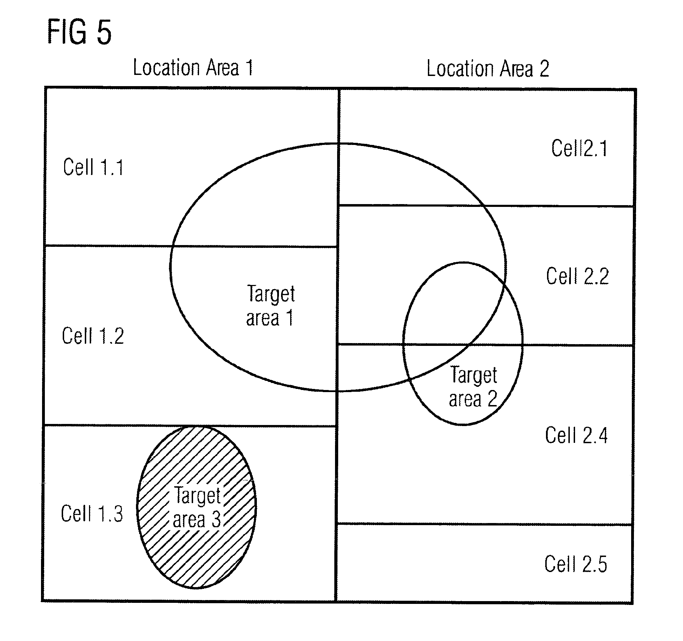

Auch wenn zwei Anfragen nicht absolut identische Areas behandeln, so kann der verwendete Algorithmus doch zu denselben Location Areas oder Zellen führen. Das folgende Beispiel aus Figur 5 soll diese Idee verdeutlichen. Es wird ein Bereich gezeigt, der aus zwei Location Areas, Location Area 1 und Location Area 2 besteht. Diese Location Areas sind ihrerseits wiederum in Funkzellen (Cell 1.1, Cell 1.2, Cell 1.3, Cell 2.1 usw.) aufgeteilt. Es existieren verschiedene Anwendungen, die Anfragen an drei Target Areas stellen, also Zielgebiete, die sich teilweise mit den Location Areas und den Funkzellen überdecken. In diesem Fall besteht nur ein kleiner überlappender Bereich zwischen Target Area 1 und Target Area 2. Target Area 1 überdeckt dabei Location Area 1 und Location Area 2, Target Area 2 überdeckt lediglich einen Teil von Location Area 2 und Target Area 3 ihrerseits nur Location Area 1. Wenn eine Anfrage für Target Area 1 eingeht, so kann dieses Ergebnis später ohne weitere Anfrage ebenfalls für die Target Area 2 beziehungsweise Target Area 3 verwendet werden, ohne noch einmal Informationen von diesem MSC anzufordern. Für die Target Area 1 müssen die Zellen Cell 2.1, Cell 2.2 und Cell 2.4 angefragt werden. Diese Ergebnisse können später für die Target Area 2 wiederverwendet werden.

Ein Algorithmus könnte wie folgt aussehen:
Schritt 1:
Nach Erhalt eines Befehls
LAP: AREA_REQUEST
wird die angeforderte Area mit denjenigen verglichen, die kurz vorher beendet wurden, beziehungsweise deren Anfrage noch nicht fertig bearbeitet ist. Finden sich beim Vergleich Übereinstimmungen, so wird der gerade empfangene Request aus den bereits gespeicherten Antworten beantwortet oder solange verzögert, bis das Ergebnis verfügbar ist. Dabei ist zu beachten, dass unterschiedliche Parameter in der Anfrage vorhanden sein können, wie "Quality of Service"-Parameter und Genauigkeit der Anfrage.
Schritt 2:
Nach Erhalt einer Liste von ausgewählten Netzknoten wie in Teil A, Schritt 3 bereits beschrieben, oder der Liste von Location areas beziehungsweise Zellen, wie in Teil C, Algorithmus B, beschrieben, kann der LAS die Anfrage in eine Menge von einzelnen Operationen für Subareas herunterbrechen. Für jede Subarea wird die Anfrage behandelt wie zuvor in Schritt 1 beschrieben. Subareas für die kein Resultat vorliegt, werden gesammelt und die Anfragen dann an die GMLCs weitergeleitet, wie bereits oben beschrieben.
   Schritt 3:
   Die eingehenden Resultate der neuen Anfragen werden im Cache gespeichert, zusammen mit einem Zeitstempel. Sobald alle erforderlichen Informationen gesammelt sind, die für die Antwort der ursprünglichen Anfrage notwendig sind, wird zusammen mit den Resultaten aus dem Cache eine Antwort erzeugt. Optional können auch Teilergebnisse sofort an den External Client gesendet werden. Dieses verbessert zumindest für einen Teil die Antwortzeiten und verteilt die Last über die Zeit.

Der zweite Schritt kann durch die beschriebene Architektur und Datenbanken in LAS noch weiter verbessert werden:
Wenn die Abfrage AREA_REQUEST es erlaubt, dass auch Antworten mit einer größeren Ungenauigkeit zurückgesendet werden, oder auch mit Ortinformationen, deren Zeitstempel weiter zurückliegt, kann LAS die Ergebnisse früherer Anfragen zur Beantwortung heranziehen. Dieses senkt die Anzahl der Anfragen, die an den GMLC weitergestellt werden müssen.

Auch die Kenntnis der internen Struktur von verschiedenen Netzbetreibern kann die Netzlast senken.

Beispiel 1: Ein roamender Teilnehmer außerhalb seines Heimatnetzes kann sich alternativ in zwei Besuchsnetzen VPLMN1 und VPLMN2 einbuchen. Wenn der LAS die Position des Teilnehmers in VPLMN1 genau kennt und kurz danach eine Anfrage für VPLMN2 erfolgt, der Teilnehmer inzwischen zu VPLMN2 gewechselt ist und nur diese Tatsache dem LAS bekannt ist, kann auch aus der exakten Position aus VPLMN1, der Zeitdifferenz und der durchschnittlichen Geschwindigkeit des Teilnehmers die gegenwärtige Position in der erforderlichen Qualität ausgerechnet werden, ohne dass eine neue, exaktere Ortsanfrage an das zweite Besuchernetz VPLMN2 durchgeführt werden muss.

Beispiel 2: Hierzu kommen wir noch mal Figur 3 zurück. Sofern bekannt ist, dass der Aufenthaltsort sich vor einiger Zeit in Networknode 1 befunden hat und eine durchschnittliche Ge schwindigkeit es dem Teilnehmer nicht erlaubt, sich bereits im Networknode 3-Bereich aufzuhalten, kann eine Anfrage an diesen vermieden werden. Durch Einsatz von Algorithmen die einige zurückliegende Positionen des Teilnehmers berücksichtigen, kann auch die Genauigkeit ohne Abfrage der Netze gesteigert werden. Einige Algorithmen sind in dem bereits oben zitierten Dokument von Lance Doherty et. al. beschrieben.

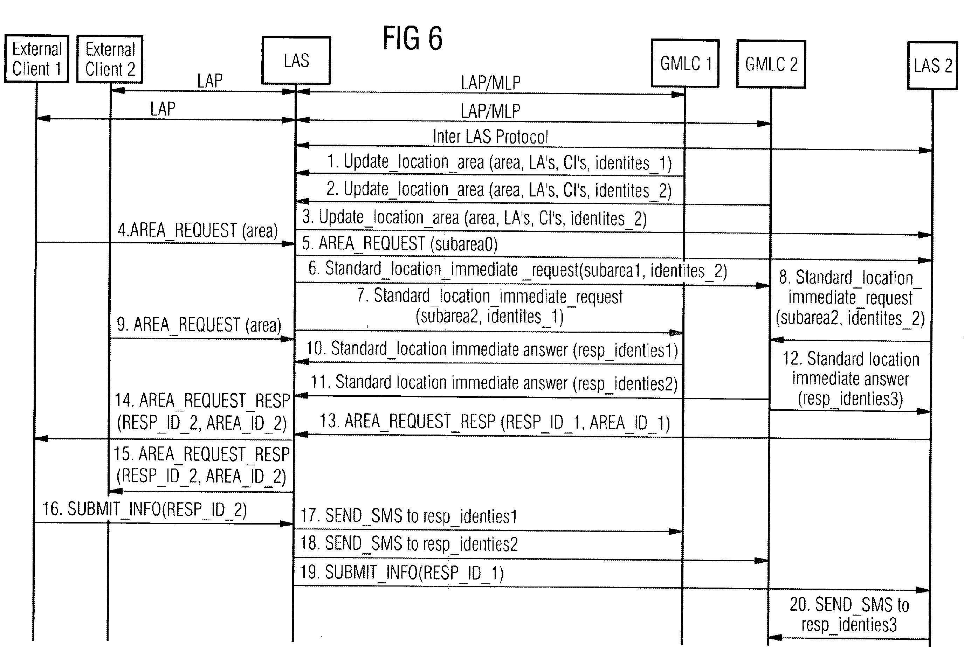

In Figur 6 findet sich eine Zusammenfassung der Algorithmen. Das Aufrufdiagramm ist nur beispielhaft für einige Aspekte der Erfindung, es ist auch nicht vollständig, da einige notwendige Antwortnachrichten weggelassen wurden. Dargestellt ist ein Ortsinformationsserver LAS, zwei Anwendungsprogramme external client 1 und 2, mit denen der LAS über das Protokoll LAP kommuniziert, zwei Netze mit den Netzelementen GMLC1 und GMLC2, mit denen der Ortsinformationsserver über das Protokoll LAP-MLP kommuniziert, sowie ein zweiter Ortsinformationsserver LAS2, mit dem der erste LAS über ein Inter LAS-Protokoll kommuniziert.
Die zwei unabhängigen Anwendungsprotokolle wollen beide an alle Teilnehmer im selben Gebiet eine SMS senden. Dieses Gebiet wird von den zwei unabhängigen Netzen, repräsentiert von GMLC1 und GMLC2, betreut.
Nachrichten 1 und 2:
   GMLC1 und GMLC2 senden ihre Ortsinformationskoordinaten der Areas für die sie zuständig sind und optional Struktur und Ort der Location Areas und Funkzellen zum LAS. Zusätzlich kann die Nachricht eine Struktur der Identitäten enthalten und/oder eine Liste von derzeit aktiven Identitäten in dieser Area.
Nachricht 3:
Der LAS ist für einen Teil des Ortes vom GMLC2 nicht zuständig, deshalb wird der entsprechende Teil der Informationen in einer Nachricht zum LAS2 weitergeleitet. In dieser kleinen Netzkonfiguration scheint das nicht optimal zu sein, aber es zeigt die Flexibilität des Protokolls.
Nachricht 4:
   Der external client 1 sendet einen AREA_REQUEST an den LAS, dieser enthält eine Beschreibung der angeforderten Area.
Nachricht 5:
   Ein Teil dieser angeforderten Area (Subarea 0) wird nicht vom LAS, sondern vom zweiten Ortsserver LAS2 behandelt. Deshalb wird diese Anforderung an den LAS2 weitergeleitet.
Nachricht 6:
   Eine Standard MLP-Protokollnachricht, wie beschrieben bei OMA, wird an den GMLC2 gesendet. Diese enthält die Subarea 1, die vom GLMC2 bedient wird und die Identitäten, die von GMLC2 benutzt werden
Nachricht 7:
   Das Gleiche gilt für GMLC1.
Nachricht 8:
   Auch der Ortsserver LAS2 sendet nun Standard MLP-Protokollnachrichten für die Area, die von ihm und GMLC2 bedient wird, an den GMLC2.
Nachricht 9:
   Auch der zweite external client 2 sendet nun eine Ortsnachfrage AREA_REQUEST für dieselbe Area wie in Nachricht 4. Der Ortsserver LAS bemerkt diese Tatsache, und verzögert die Behandlung dieser Nachricht, da er auf die Antworten der ersten Anfrage wartet (Nachricht 4).
Nachricht 10:
   Der Ortsserver empfängt die Antworten vom GMLC1. Darin enthalten sein kann eine lange Liste von Identitäten und ihrer Ortsangaben oder Fehlermeldungen. Diese Antwort wird gespei chert, bis alle angeforderten Informationen eingetroffen sind, oder bis eine Zeitüberschreitung eintritt.
Nachricht 11:
   Das Gleiche gilt für den GLMC2.
Nachricht 12:
   Auch der zweite Ortsserver LAS2 sammelt Informationen.
Nachricht 13:
   Der zweite Ortsserver LAS2 erzeugt eine temporäre Identität RESP_ID_1 für die gesammelten Teilnehmeridentitäten und einen Identifikator AREA_ID_1 für diese Area zur späteren Benutzung. Diese werden an den Ortsserver LAS gesendet.
Nachricht 14:
   Der Ortsserver LAS hat nun alle notwendigen Informationen, er erzeugt ebenfalls eine temporäre Identität RESP_ID_2 und einen Identifikator AREA_ID_2 für diesen Bereich für spätere Benutzung. Diese werden an den ersten external client 1 gesendet.
Nachricht 15:
   Nun kann auch die Ortsnachfrage AREA_REQUEST vom external client 2 beantwortet werden. Es werden nur Informationen benutzt, die durch die erste Anfrage vom external client 1 gesammelt wurden.
Nachricht 16:
   Der external client 1 will nun eine Kurznachricht SMS an alle Teilnehmer senden, die sich in der vorhin angegebenen Area befinden. Er sendet daher eine SUBMIT_INFO Nachricht mit dem Text der SMS an den Ortsserver LAS an die dort gespeicherte Liste mit der Identität RESP_ID_2.
Nachricht 17:
   Der Ortsserver LAS wird den Text dieser Kurznachricht SMS an alle Teilnehmeridentitäten senden, die er von GLMC1 zuvor gespeichert hat. In diesem Fall ist das Ziel normalerweise nicht der GLMC, sondern ein Netzknoten, der für Kurznachrichten verantwortlich ist.
Nachricht 18:
   Das Gleiche gilt für den GMLC2.
Nachricht 19:
   Die Information wird nun auch mittels SUBMIT_INFO an den Ortsserver 2 LAS2 gesendet, wobei RESPOND_ID_1 verwendet wird.
Nachricht 20:
   Auch Ortsserver 2 LAS2 wird, wie in Nachricht 17 weiter oben beschrieben, vorgehen.

## Patentansprüche

1. Verfahren zum Bereitstellen eines ortsabhängigen Dienstes in einem abgegrenzten geographischen Bereich (Area) für eine Mehrzahl von Teilnehmern in diesem geographischen Bereich,
wobei in dem geographischen Bereich mindestens zwei Einrichtungen zur Bestimmung der geographischen Position von Mobilfunknutzern (GMLC) vorgesehen sind, die jeweils einem Mobilfunknetz zugeordnet sind, welches in dem abgegrenzten geographischen Bereich (Area) Kommunikationsdienste anbietet,
bei dem
- von einem Clienten des ortsabhängigen Dienstes (LCS) eine Anfrage zur Identität von Teilnehmern in diesem geographischen Bereich (Area) an ein zentrales Netzelement (LAS1) gesendet wird, welches beiden Mobilfunknetzen zugeordnet ist und eine Datenbank enthält, welche eine Zuordnung zwischen den Identitäten der Teilnehmer und Netzknoten der Mobilfunknetze enthält,
- das zentrale Netzelement (LAS1) eine aktuelle Information über die in dem abgegrenzten geographischen Bereich aktiven Teilnehmern von den mindestens zwei Einrichtungen zur Bestimmung der geographischen Position von Mobilfunknutzern (GMLC) abfragt, und
- das zentrale Netzelement (LAS1) das Ergebnis dem Clienten des ortsabhängigen Dienstes (LCS) zurückliefert.

2. Verfahren nach Patentanspruch 1,
**dadurch gekennzeichnet, dass**
sich eine erste Einrichtung zur Bestimmung der geographischen Position von Mobilfunknutzern (GMLC Network 1) innerhalb der Infrastruktur eines ersten Mobilfunknetzes und eine zweite Einrichtung zur Bestimmung der geographischen Position von Mobilfunknutzern (GMLC Network 2) innerhalb der Infrastruktur eines zweiten Mobilfunknetzes befindet.

3. Verfahren nach einem der vorigen Patentansprüche,
**dadurch gekennzeichnet, dass**
das zentrale Netzelement nach Erhalt einer Anfrage zunächst überprüft, ob das gewünschte Ergebnis bereits als Ergebnis einer früheren Anfrage gespeichert hat und zurückliefern kann oder
ob das zentrale Netzelement das gewünschte Ergebnis bei der mindestens einen Einrichtung zur Bestimmung der geographischen Position von Mobilfunknutzern (GMLC) abfragen muss.

4. Verfahren nach einem der vorigen Patentansprüche,
**dadurch gekennzeichnet, dass**
das zentrale Netzelement nach Erhalt einer Anfrage zunächst überprüft, ob die gewünschte Anfrage bereits durchgeführt wurde oder auf das Ergebnis der früheren Anfrage noch gewartet wird, und
nach Empfang des Ergebnisses der früheren Anfrage auch die Anfrage beantwortet werden kann.

5. Verfahren nach Patentanspruch 3,
**dadurch gekennzeichnet, dass**
ein durch das zentrale Netzelement bei einer Einrichtung zur Bestimmung der geographischen Position von Mobilfunknutzern abgefragtes Ergebnis mit einer zusätzlichen Kennzeichnung, insbesondere einem Zeitstempel und/oder einer Angabe zur Genauigkeit der Abfrage, versehen wird und die Wiederverwendung des gespeicherten Ergebnisses für eine mindestens zweite Anfrage abhängig von der zusätzlichen Kennzeichnung geschieht.

6. Verfahren nach Patentanspruch 1,
**dadurch gekennzeichnet, dass**
das zentrale Netzelement die Ergebnisse der Abfragen von den mindestens zwei Einrichtungen zur Bestimmung der geographischen Position von Mobilfunknutzern (GMLC) sammelt und sobald alle abgefragten Einrichtungen zur Bestimmung der geographischen Position von Mobilfunknutzern geantwortet haben, die Antworten zusammenfasst und das Ergebnis dem ortsabhängigen Dienst (LCS) zurückliefert.

7. Verfahren nach Patentanspruch 1,
**dadurch gekennzeichnet, dass**
das Gebiet der Anfrage ein erstes geographisches Gebiet (Location Area 1) umfasst, für das ein erstes zentrales Netzelement (LAS1) zuständig ist,
und ein zweites geographisches Gebiet (Location Area 2) umfasst, für das ein zweites zentrales Netzelement (LAS2) zuständig ist, und
dass das erste zentrale Netzelement (LAS1) eine Anfrage erhält, und diese Anfrage für das zweite geographische Gebiet an das zweite zentrale Netzelement (LAS2) weiter gibt (AREA_REQUEST (subarea)).

8. Verfahren nach Patentanspruch 1,
**dadurch gekennzeichnet, dass**
das zentrale Netzelement (LAS) die Ergebnisse der Anfragen als Liste speichert und nur die Kennzeichnung der Liste dem ortsabhängigen Dienst (LCS) zurückliefert.

9. Verfahren nach Patentanspruch 8,
**dadurch gekennzeichnet, dass**
das zentrale Netzelement (LAS) zusätzlich Eigenschaften der ermittelten Teilnehmer von den Einrichtungen zur Bestimmung der geographischen Position von Mobilfunknutzern (GMLC) übermittelt bekommt oder anderweitig ermittelt, diese sammelt und zur späteren Verwendung speichert, und zusammen mit der Kennzeichnung der Liste dem ortsabhängigen Dienst (LCS) zurückliefert.

10. Verfahren nach einem der vorigen Patentansprüche,
**dadurch gekennzeichnet, dass**
das zentrale Netzelement (LAS) eine Zuordnung zwischen der Identität mindestens eines Teilnehmers, für den eine Ortsinformation abgefragt wird, und den für diesen Teilnehmer verantwortlichen Netzknoten beinhaltet und, wenn das zentrale Netzelement eine Anfragenachricht vom ortsabhängigen Dienst (LCS) erhält, diese Anfrage an jede Identität verteilt, die für diesen Netzknoten gespeichert ist.

11. Vorrichtung zum Bereitstellen eines ortsabhängigen Dienstes,
in einem abgegrenzten geographischen Bereich (Area) für eine Mehrzahl von Teilnehmern in diesem geographischen Bereich,
wobei in dem geographischen Bereich mindestens zwei Einrichtungen zur Bestimmung der geographischen Position von Mobilfunknutzern (GMLC) vorgesehen sind, die jeweils einem Mobilfunknetz zugeordnet sind, welches in dem abgegrenzten geographischen Bereich (Area) Kommunikationsdienste anbietet,
mit
- Mitteln zum Empfang von von einem Clienten des ortsabhängigen Dienstes (LCS) gesendeten Anfragen zur Identität von Teilnehmern in diesem geographischen Bereich,
- Mitteln zum Senden einer Abfrage von aktuellen Informationen über die in dem abgegrenzten geographischen Bereich aktiven Teilnehmer an die beiden Einrichtungen zur Bestimmung der geographischen Position von Mobilfunknutzern (GMLC),
- Mitteln zum Empfangen der Antworten von den beiden angefragten Einrichtungen zur Bestimmung der geographischen Position von Mobilfunknutzern (GMLC),
- Mitteln zur Bearbeitung der Antworten, und
- Mitteln zum Senden des Ergebnisses an den Clienten des ortsabhängigen Dienstes (LCS).

12. Vorrichtung nach Patentanspruch 11
mit Mitteln zum Speichern (DB) der Antworten von der angefragten Einrichtung zur Bestimmung der geographischen Position von Mobilfunknutzern und einer zusätzlichen Kennzeichnung der Antworten, und
mit Mitteln zum Vergleichen einer neuen Anfrage mit den bereits gespeicherten Antworten.

13. Vorrichtung nach Patentanspruch 11
mit Mitteln zum Speichern (DB) der Antworten von der angefragten Einrichtung zur Bestimmung der geographischen Position von Mobilfunknutzern und Senden einer eindeutigen Kennzeichnung der Antworten, und
mit Mitteln zum Benutzen der eindeutigen Kennzeichnung der Antworten in darauf folgenden Nachrichten vom ortsabhängigen Dienst (LCS).

## Claims

1. Method for providing a location-based service in a limited geographic area for a plurality of subscribers in said geographic area
with at least two devices for determining the geographic position of mobile radio users (GMLC) being provided in the geographic area, said mobile radio users (GMLC) being assigned respectively to a mobile radio network, which provides communication services in the limited geographic area,
wherein
- an inquiry concerning the identity of subscribers in this geographic area is sent from a client of the location-based service (LCS) to a central network element (LAS1), which is assigned to both mobile radio networks and contains a database, which contains an assignment between the identities of the subscribers and network nodes of the mobile radio networks,
- the central network element (LAS1) requests current information about the subscribers active in the limited geographic area from the at least two devices for determining the geographic position of mobile radio users (GMLC), and
- the central network element (LAS1) delivers the result to the client of the location-based service (LCS).

2. Method according to claim 1,
**characterised in that**
a first device for determining the geographic position of mobile radio users (GMLC network 1) is located within the infrastructure of a first mobile radio network and a second device for determining the geographic position of mobile radio users (GMLC network 2) is located within the infrastructure of a second mobile radio network.

3. Method according to one of the preceding claims,
**characterised in that**
upon receiving an inquiry the central network element first checks whether the desired result has already been stored as a result of a previous inquiry and can be delivered back, or whether the central network element must request the desired result from the at least one device for determining the geographic position of mobile radio users GMLC).

4. Method according to one of the preceding claims,
**characterised in that**
upon receiving an inquiry the central network element first checks whether the desired inquiry has already been carried out or the result of the previous inquiry is still outstanding and, after receiving the result of the previous inquiry, can also respond to the inquiry.

5. Method according to claim 3,
**characterised in that**
a result requested by the central network element from a device for determining the geographic position of mobile radio users is provided with an additional identifier, in particular a timestamp and/or information relating to the accuracy of the request and the stored result is reused for an at least second inquiry as a function of the additional identifier.

6. Method according to claim 1,
**characterised in that**
the central network element collects the results of the requests from the at least two devices for determining the geographic position of mobile radio users (GMLC) and, as soon as all requested devices for determining the geographic position of mobile radio users have responded, combines the responses and delivers the result back to the location-based service (LCS).

7. Method according to claim 1,
**characterised in that**
the region of the inquiry comprises a first geographic region (location area 1), for which a first central network element (LAS1) is responsible,
and comprises a second geographic region (location area 2), for which a second central network element (LAS2) is responsible, and that a first central network element (LAS1) receives an inquiry and forwards this inquiry for the second geographic region to the second central network element (LAS2) (AREA REQUEST (sub-area)).

8. Method according to claim 1,
**characterised in that**
the central network element (LAS) stores the results of inquiries as a list and delivers only the list identifier back to the location-based service (LCS).

9. Method according to claim 8,
**characterised in that**
the central network element (LAS) additionally receives or otherwise determines characteristics of the subscribers determined from the devices for determining the geographic position of mobile radio users (GMLC), collects and stores these for later use and delivers them back to the location-based service (LCS) together with the list identifier.

10. Method according to one of the preceding claims,
**characterised in that**
the central network element (LAS) contains an assignment between the identity of at least one subscriber for which location information is requested and the network node responsible for said subscriber and, when the central network element receives an inquiry message from the location-based service (LCS), distributes said inquiry to every identity stored for said network node.

11. Device for providing a location-based service, in a limited geographic area
for a plurality of subscribers in said limited geographic area, with at least two devices for determining the geographic position of mobile radio users (GMLC) being provided in the geographic area, said mobile radio users (GMLC) being assigned respectively to a mobile radio network, which provides communication services in the limited geographic area,
with
- means for receiving inquiries sent by a client of the location-based service (LSC) about the identity of subscribers in this geographic area,
- means for sending a request for current information about the subscribers active in the limited geographic area to the two devices for determining the geographic position of mobile radio users (GMLC),
- means for receiving responses from the two requested device for determining the geographic position of mobile radio users (GMLC),
- means for processing the responses and
- means for sending the result to the client of the location-based service (LCS).

12. Device according to claim 11,
with means for storing (DB) the responses from the requested device for determining the geographic position of mobile radio users and an additional response identifier and
with means for comparing a new inquiry with the responses already stored.

13. Device according to claim 11,
with means for storing (DB) the responses from the requested device for determining the geographic position of mobile radio users and sending a unique response identifiers and
means for using the unique response identifier in subsequent messages from the location-based service (LCS).

## Revendications

1. Procédé de mise à disposition d'un service dépendant de la localisation dans une zone géographique délimitée (Area) pour une pluralité d'abonnés dans cette zone géographique, au moins deux dispositifs destinés à déterminer la position géographique d'usagers radio mobiles (GMLC) étant prévus dans ladite zone géographique, qui sont affectés chacun à un réseau radio mobile proposant des services de communication dans la zone géographique délimitée (Area),
dans lequel
- un client du service dépendant de la localisation (LCS) envoie une demande concernant l'identité d'abonnés dans cette zone géographique (Area) à un élément de réseau central (LAS1) affecté aux deux réseaux radio mobiles et comportant une banque de données laquelle contient une affectation entre les identités des abonnées et des noeuds de réseau des réseaux radio mobiles,
- l'élément de réseau central (LAS1) interroge lesdits au moins deux dispositifs destinés à déterminer la position géographique d'usagers radio mobiles (GMLC) pour obtenir une information actuelle sur les abonnés actifs dans la zone géographique délimitée, et
- l'élément de réseau central (LAS1) renvoie le résultat au client du service dépendant de la localisation (LCS).

2. Procédé selon la revendication 1,
**caractérisé en ce que**
un premier dispositif destiné à déterminer la position géographique d'usagers radio mobiles (GMLC Network 1) est situé à l'intérieur de l'infrastructure d'un premier réseau radio mobile et un deuxième dispositif destiné à déterminer la position géographique d'usagers radio mobiles (GMLC Network 2) est situé à l'intérieur de l'infrastructure d'un deuxième réseau radio mobile.

3. Procédé selon l'une des revendications précédentes,
**caractérisé en ce que**
l'élément de réseau central, après réception d'une demande, vérifie d'abord s'il a déjà enregistré le résultat souhaité en tant que résultat d'une demande antérieure et s'il peut le renvoyer ou
si l'élément de réseau central doit interroger ledit au moins un dispositif destiné à déterminer la position géographique d'usagers radio mobiles (GMLC) pour obtenir le résultat souhaité.

4. Procédé selon l'une des revendications précédentes,
**caractérisé en ce que**
l'élément de réseau central, après réception d'une demande, vérifie d'abord si la demande souhaitée a déjà été effectuée ou si le résultat de la demande antérieure est encore en attente, et
si après réception de la demande antérieure il peut être répondu à la demande.

5. Procédé selon la revendication 3,
**caractérisé en ce que**
un résultat demandé par l'élément de réseau central auprès d'un dispositif destiné à déterminer la position géographique d'usagers radio mobiles est muni d'une identification supplémentaire, en particulier d'un chronotimbre et/ou d'une indication sur la précision de l'interrogation, et **en ce que** la réutilisation du résultat enregistré pour au moins une deuxième demande se fait en fonction de l'identification supplémentaire.

6. Procédé selon la revendication 1,
**caractérisé en ce que**
l'élément de réseau central collectionne les résultats des interrogations auprès desdits au moins deux dispositifs destinés à déterminer la position géographique d'usagers radio mobiles (GMLC) et lorsque tous les dispositifs interrogés destinés à déterminer la position géographique d'usagers radio mobiles ont répondu, il réunit les réponses et renvoie le résultat au service dépendant de la localisation (LCS).

7. Procédé selon la revendication 1,
**caractérisé en ce que**
la zone de la demande comprend une première zone géographique (Location Area 1) qui est de la compétence d'un premier élément de réseau central (LAS1),
et une deuxième zone géographique (Location Area 2) qui est de la compétence d'un deuxième élément de réseau central (LAS2), et
**en ce que** le premier élément de réseau central (LAS1) reçoit une demande et transmet cette demande pour la deuxième zone géographique au deuxième élément de réseau central (LAS2) (AREA_REQUEST (subarea)).

8. Procédé selon la revendication 1,
**caractérisé en ce que**
l'élément de réseau central (LAS) enregistre les résultats des demandes sous forme de liste et ne renvoie que l'identification de la liste au service dépendant de la localisation (LCS).

9. Procédé selon la revendication 8,
**caractérisé en ce que**
l'élément de réseau central (LAS) se voit transmettre par les dispositifs destinés à déterminer la position géographique d'usagers radio mobiles (GMLC), ou détecte ailleurs en outre des caractéristiques des abonnés détectés, collectionne et enregistre celles-ci en vue d'une utilisation ultérieure et les renvoie ensemble avec l'identification de la liste au service dépendant de la localisation (LCS).

10. Procédé selon l'une des revendications précédentes,
**caractérisé en ce que**
l'élément de réseau central (LAS) comporte une affectation entre l'identité d'au moins un abonné pour lequel une information de localisation est demandée, ainsi que le noeud de réseau responsable de cet abonné, et lorsque l'élément de réseau central reçoit un message de demande du service dépendant de la localisation (LCS), il distribue cette demande à chaque identité enregistrée pour ce noeud de réseau.

11. Appareil de mise à disposition d'un service local,
dans une zone géographique délimitée (Area) pour une pluralité d'abonnés dans cette zone géographique,
au moins deux dispositifs destinés à déterminer la position géographique d'usagers radio mobiles (GMLC) étant prévus dans ladite zone géographique, qui sont affectés chacun à un réseau radio mobile proposant des services de communication dans la zone géographique délimitée (Area), comprenant
- des moyens permettant de recevoir des demandes envoyées par un client du service dépendant de la localisation (LCS) concernant l'identité d'abonnés dans cette zone géographique,
- des moyens permettant d'envoyer aux deux dispositifs destinés à déterminer la position géographique d'abonnés radio mobiles (GMLC) une interrogation pour obtenir des informations actuelles sur les abonnés actifs dans la zone géographique délimitée,
- des moyens permettant de recevoir les réponses des deux dispositifs interrogés destinés à déterminer la position géographique d'abonnés radio mobiles (GMLC),
- des moyens permettant de traiter les réponses, et
- des moyens permettant d'envoyer le résultat au client du service dépendant de la localisation (LCS).

12. Appareil selon la revendication 11,
comprenant des moyens permettant d'enregistrer (DB) les réponses du dispositif interrogé destiné à déterminer la position géographique d'usagers radio mobiles et une identification supplémentaire des réponses, et
comprenant des moyens permettant de comparer une nouvelle demande avec les réponses déjà enregistrées.

13. Appareil selon la revendication 11,
comprenant des moyens permettant d'enregistrer (DB) les réponses du dispositif interrogé destiné à déterminer la position géographique d'usagers radio mobiles et d'envoyer une identification univoque des réponses, et
comprenant des moyens permettant d'utiliser l'identification univoque des réponses dans des messages subséquents du service dépendant de la localisation (LCS).
